(19) Europäisches Patentamt / European Patent Office / Office européen des brevets

(11) **EP 3 781 877 B1**

(12) **EUROPEAN PATENT SPECIFICATION**

(45) Date of publication and mention
of the grant of the patent:
**23.03.2022 Bulletin 2022/12**

(21) Application number: **19726195.1**

(22) Date of filing: **18.04.2019**

(51) International Patent Classification (IPC):
*F24F 5/00* (2006.01)    *F24F 7/007* (2006.01)
*E04B 1/76* (2006.01)    *E04B 5/48* (2006.01)

(52) Cooperative Patent Classification (CPC):
**E04B 1/76; E04B 5/48; F24F 5/005; F24F 5/0075;**
**F24F 7/007;** Y02A 30/00; Y02B 10/40; Y02B 30/54;
Y02B 30/90

(86) International application number:
**PCT/NL2019/050235**

(87) International publication number:
**WO 2019/203651 (24.10.2019 Gazette 2019/43)**

(54) **CONTROL OF THE INDOOR CLIMATE IN AN INNER SPACE USING AN INSULATION ASSEMBLY ARRANGED UNDER THE FLOOR**

STEUERUNG DES INNENRAUMKLIMAS IN EINEM INNENRAUM UNTER VERWENDUNG EINER UNTER DEM BODEN ANGEORDNETEN ISOLIERANORDNUNG

RÉGULATION DE CLIMAT INTÉRIEUR D'ESPACE INTERNE À L'AIDE D'ENSEMBLE D'ISOLATION AGENCÉ SOUS LE PLANCHER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.04.2018 NL 1042826**

(43) Date of publication of application:
**24.02.2021 Bulletin 2021/08**

(73) Proprietors:
• **Innovy**
  **1851 AG Heiloo (NL)**
• **Hagg, Franklin**
  **1851 AG Heiloo (NL)**

(72) Inventor: **HAGG, Franklin**
**1851 AG Heiloo (NL)**

(74) Representative: **EP&C**
**P.O. Box 3241**
**2280 GE Rijswijk (NL)**

(56) References cited:
EP-A2- 0 130 957    DE-A1- 19 727 788
US-A- 3 811 239    US-A- 4 346 132

# Description

The invention relates to control of an indoor climate of an inner space, said inner space being partly delimited by a floor, wherein an underfloor space, for example a crawl space, is present under the floor.

DE19727788 A1 discloses a climate control system for controlling a climate of an inner space.

The climate control system comprises a panel with an air inlet opening at a bottom. Air impelled by a pump may flow up a channel between a housing and a front of a porous block of a non-transparent material. After passing through the porous block the air passes through a chamber which widens towards the top, between the block and a rear wall. The air leaves the channel through a second opening.

The invention aims to provide climate control and associated means that produce one or more improvements relative to known underfloor insulation solutions.

For example, an objective is to provide a climate control that achieves one or more of the following aims: improved energy efficiency, usability for several climate control purposes, easy to install, low cost of manufacture, easy to store and transport, easy to install, no substantial limitation to later access to the crawl space.

The invention provides a method according to claim 1 for controlling an indoor climate of an inner space. Herein the inner space is partly delimited by a floor, wherein an underfloor space, for example a crawl space or an (unheated) cellar, is present under the floor.

The method employs a flow-through insulation assembly that is arranged under the floor of the inner space and in the underfloor space. For example, the assembly is placed with the bottom wall thereof on the ground in the crawl space.

The insulation assembly has a gas-tight chamber with a top wall, a bottom wall, and a perimeter, for example with a peripheral wall. The top wall is located at a distance under or against the floor of the inner space. In practical embodiment, several insulation assemblies are arranged under a floor, for example side by side, or, for example, between floor joists, so that the underside of the floor is almost completely covered with insulation assemblies.

In an insulation assembly, the top wall and the bottom wall, and the optional peripheral wall, are each essentially formed by an air-tight film material, for example of suitable plastic film.

Furthermore, a perforated top film and a perforated bottom film are arranged in the gas-tight chamber.

The top wall, the bottom wall, the perforated top film, and the perforated bottom film have air-tight joints with the perimeter of the gas-tight chamber, so that a top cavity of the insulation assembly is delimited between the perforated top film and the top wall, a bottom cavity of the insulation assembly is delimited between the perforated bottom film and the bottom wall, and a flow-through space for gas is delimited between the perforated top film and the perforated bottom film.

The insulation assembly has a top opening that is connected to the top cavity, and a bottom opening that is connected to the bottom cavity.

The method employs a ventilation system with at least one fan.

For controlling the indoor climate of the inner space, said ventilation system with the one or more fans is operated in order to supply a gas, for example air, to the gas-tight chamber of the insulation assembly.

Supply of the gas, for example air, takes place via either the bottom opening or the top opening. The gas supplied leaves the gas-tight chamber via the other one of the bottom opening and the top opening. Depending on to which of the bottom opening and the top opening the gas is supplied, the gas flows either from bottom to top or from top to bottom through the insulation assembly.

If the gas is supplied by the ventilation system via the bottom opening the gas comes into the associated bottom cavity and then passes through the perforated bottom film associated with the cavity. The gas then comes into the space for gas flow-through between the bottom film and the top film, and flows upwards through said space, and then leaves said space through the perforated top film. The gas then flows into the top cavity and leaves said top cavity and the gas-tight chamber via the top opening.

In one embodiment the ventilation system is only able to create this flow from bottom to top.

It is also conceivable for the ventilation system to be configured and to be operated to produce a gas flow from top to bottom. In this case the gas is supplied by the ventilation system via the top opening and the gas comes into the associated top cavity. Then the gas passes through the perforated top film associated with said cavity. The gas then comes into the space for gas flow-through between the bottom film and the top film, and flows down through said space, and then leaves said space through the perforated bottom film. The gas then flows into the bottom cavity and leaves said bottom cavity and the gas-tight chamber via the bottom opening.

It is also conceivable, even advantageous, if the ventilation system is configured and operated so that it is possible to select flow from bottom to top or flow from top to bottom through the insulation assembly.

Based on examples, further explanation will be given of which direction of flow is favourable for which purpose of control of the indoor climate.

The perforated top film and perforated bottom film have small flow-through openings or perforations, which preferably are present over the greater part of the area of the top film and the bottom film.

For example, the top film and the bottom film are perforated over almost their whole area, for example uniformly over the whole area.

For example, the perforated top film and/or the perforated bottom film are provided with a heat-radiation reflecting layer, for example a metal layer, for example provided with a metal film, for example plasticized aluminium. This blocks heat radiation.

For example, the perforations each have a diameter between 0.04 mm and 1 mm, preferably between 0.1 and 0.5 mm. The perforations may be present uniformly over the whole surface, or in groups.

For example, at least 10 000 perforations per $m^2$ are present in the perforated bottom film and/or in the perforated top film.

For example, the perforated top film and/or the perforated bottom film are made of a vapour-permeable film, which has perforations that allow water vapour to pass through. For example, with perforations with a diameter between 0.04 mm and 0.2 mm, for example between 0.05 and 0.1 mm. Vapour-permeable film of this kind is used on a large scale in the building industry for other purposes. For example, the vapour-permeable film has an aluminium layer or the film is metallized, for example with aluminium.

For example, the perforations are so small that a water column of 5 centimetres does not penetrate through the perforations.

For example, a vapour-permeable aluminium film is used for the perforated top film and/or the perforated bottom film, for example, with perforations of 0.2 mm diameter and with 20 perforations per $cm^2$.

The gas flow undergoes a pressure drop during each passage through the perforated films. For a good distribution of flow over the horizontal cross-section of the flow-through space, it is preferable for the pressure drop over the perforated films and the space in-between to be at least 15 times greater than the pressure drop over each of the cavities. This pressure drop may be achieved through suitable choice of the pores in the perforated films and/or the size of the cavities.

The method makes it possible to allow the gas that flows through the space between the perforated bottom film and top film, thus from bottom to top or vice versa, to flow more quickly than the diffusion rate of the gas. Depending on the situation, heat or cold, which then flows parallel to the gas, cannot then flow against the gas flow and is therefore blocked, and is preferably recovered. If the gas flow goes from warm to cold, a warm front develops, which blocks cold. If the gas flow goes from cold to warm, a cold front develops, which blocks heat.

In the case of a cold front, the through-flowing gas is warmed up, which costs heat energy, which is partly recovered from the diffuse heat flow, and in the case of a warm front this heat may be lost to the exterior. In order to limit this, it is preferable to keep the amount of gas flowing through the insulation assembly as small as possible, and/or utilize a ventilation flow already associated with the inner space for the gas flow, and/or use the ventilation or air circulation of a heat pump for the gas flow. It is also conceivable to recover the heat with a heat pump.

The flow of the gas through the space between the top film and the bottom film is, preferably, laminar. In practical terms, this is possible by having small flow-through openings, for example pores or perforations, in the perforated top film and the bottom film in combination with the large area of these films. As a result, the flow-through velocity of the gas can be very low and the gas flow in said space between the perforated films can be laminar. This prevents problematic thermal and/or convective turbulence in said space, and therefore also disturbance of the blocking action as described. This favourable action can be achieved in an especially practical manner if thermal stratification occurs in the space between the perforated films through which the gas flows, for example if in said space through which the gas flows, the top is warmer and the bottom is colder. This is often the case with a (crawl) space under the floor of an inner space.

Thermal velocity is a diffuse quantity, which depends on the average path length and the velocity of the molecules in a medium, in this case a gas. It can be determined from the Peclet number Pe, which is greater than 1 if the convective flow is greater than the diffuse flow. In the form of a formula: $Pe = v\ l\ \rho\ Cp/\lambda$, where $v$ = gas velocity perpendicular to the surface of the flow-through space between the perforated films, $l$ = path length through the flow-through space and thus the distance/height between the perforated bottom film and the perforated top film, $\rho$ = the density of the through-flowing gas, $Cp$ = the heat capacity of the through-flowing gas and $A$ = the thermal conductivity of the through-flowing gas.

If the Pe number of the through-flowing gas increases, the flow of the conduction heat is blocked more and the effective conductivity decreases, and the insulation of the insulation assembly is better.

Preferably, the insulation assembly and the ventilation system are arranged so that a Peclet number Pe greater than 0, preferably greater than 1, more preferably greater than 3, is achieved in the gas flow through the space between the perforated top film and the perforated bottom film, wherein the Pe number is determined from the velocity component $v$ of the through-flowing gas, which is parallel to the heat flow, the thickness/height of the flow-through space between the perforated top film and bottom film, the specific heat $Cp$, the specific gravity $\rho_g$, the thermal conductivity $\lambda_g$ of the through-flowing gas:

$$Pe = v\ l\ Cp\ \rho_g/\lambda_g.$$

Depending on the height of the flow-through space, the flow-through velocity for air, for example, may be between 0.05-4 mm/s and thus be 0.05-4 litres/s per $m^2$ horizontal cross-sectional area of the flow-through space of the assembly.

In one embodiment, air from outside is pumped by a fan, for example via a pipe or hose, into the bottom cavity of the insulation assembly. This air warms up through recuperation in the flow-through space and, warmed up, flows via the top cavity to the inner space, for example as warmed fresh ventilating air. If the used ventilating air is led away from said inner space, the heat present in said used ventilating air can be recovered with a heat pump, so that hardly any heat is lost at the expense of electricity consumption of the heat pump and the fan. This electricity consumption is only a small fraction of what is used without heating, and there is thus an enormous saving on energy costs. For example, at an Rc value of 20 $Km^2/W$ of the insulation assembly, a ground temperature of 10°C and a floor temperature of 20°C, with a floor area of, for example, 60 $m^2$, only 30 W is lost. With ventilation of 40 $m^3$/hour, at an outdoor temperature of 0°C the air must be warmed up with 267 W and with the loss from the floor it is approx. 297 W and with a COP of 5, an electric power of only 59 W is necessary for recovering the heat from the floor and the ventilation.

In another embodiment, in addition a circulation passage is present, connecting the bottom opening to the top opening. This circulation passage forms a closed gas circuit with the bottom cavity, the space for gas flow-through, and the top cavity. In this case the ventilation system comprises a fan for the circulation passage, which circulates gas present in the closed gas circuit and causes movement of the gas through the space for gas flow-through, from bottom to top or from top to bottom or in one of the two directions as selected. In a closed gas circuit, air may be circulated, but it may also be a gas other than air, for example carbon dioxide gas.

In an embodiment wherein the circulation of the through-flowing gas is a closed circulation, the gas is displaced, for example drawn, by means of a fan through an evaporator part of a heat pump and, cooled by the evaporator part, is conveyed either to the bottom cavity or the top cavity, depending on the desired effect on the indoor climate.

In a possible embodiment, the cooled gas from the evaporator part is conveyed to the bottom cavity. From there, the gas flows, possibly warmed through contact of the bottom cavity with the ground, to the flow-through space, in which it is warmed further by recuperation with the conduction heat, during flow from bottom to top. On arriving in the top cavity, the gas is conveyed back to the evaporator part of the heat pump, where the heat absorbed is withdrawn again and after which the circulation ends, and begins again. This heat pump brings the absorbed heat to a condenser part of the heat pump, where this heat can be supplied at a higher temperature, for example to a heating system, such as floor heating, hot-air heating, boiler, or some other heating or heat storage. Thus, the heat pump supplies net heat energy from the ground under the inner space and the conduction heat that would be lost through the floor is recovered completely. If the ventilation of the inner space is provided, for example, by a balanced ventilator at a balance efficiency of 70%, at 40 $m^3$/hour only 80 W is needed, and at a heat pump power of 297 W, there is still 217 W for heating the rest of the inner space, which is ample when good wall and window insulation is used and there is internal heat production from inter alia humans and equipment. Also, only 59 W of electric power is needed for a small, inexpensive heat pump, and the flow-through insulation assembly also requires little capital expenditure.

During the heating season, the temperature of the ground decreases, on account of the large heat content and the small absorption, at just 1 K and in the summer this can be amply increased back to the original level.

If it is desired to heat the inner space with the heat pump, then a possible embodiment envisages conveying the cooled gas from the evaporator part to the bottom cavity. From there, the gas flows, possibly warmed through contact of the bottom cavity with the ground, to the flow-through space, in which it warms further through recuperation with the conduction heat during flow from bottom to top. On arriving in the top cavity, the gas is conveyed back to the evaporator part of the heat pump, where the absorbed heat is withdrawn again and after which the circulation ends, and begins again. This heat pump brings the absorbed heat to a condenser part of the heat pump, where this heat can be supplied at a higher temperature, for example to a heating system. In practice, this solution only requires a very small heat pump, orders of magnitude smaller than currently provided for heat pumps that are provided for heating inner spaces. In particular, the invention provides the possibility of utilizing the circulating fan of the heat pump as part of the ventilation system and creating the gas flow through the insulation assembly with this, giving better insulation of the insulation assembly. Integration with a heat pump according to the invention also makes it possible in some cases to dispense with the known external unit of a heat pump that obtains heat from the outside air.

If it is desired to cool the inner space in the system with a heat pump and a closed gas circuit, then the direction of the through-flowing gas is reversed and the floor of the inner space is cooled and the ground under the inner space is warmed up if the bottom cavity is in contact with it. The heat that is released thereby in the condenser part of the heat pump may then be used for things such as hot water, for example, stored in a boiler, heat storage, or other useful applications.

The films of the insulation assembly have air-tight joints with the perimeter, such as for an air mattress. For example, the bottom wall film, the perforated bottom film, the perforated top film, and the top wall film, have direct, air-tight joints with one another. An air-tight joint is obtained, for example, with glue or by welding.

In a possible embodiment, the perimeter of the gas-tight chamber is formed by a peripheral wall, wherein the top wall, bottom wall and the perforated films have an air-tight joint on their perimeter. Preferably, said peripheral wall is foldable, so that the insulation assembly can be folded together and optionally rolled up and/or folded up into a film packet. Preferably, said peripheral wall is made of film, for example, the same film as the top wall and the bottom wall. For example, the peripheral wall has a height that matches the intended maximum distance between the perforated top film and the perforated bottom film.

In a further embodiment the insulation assembly has a further film under the bottom wall, which has an air-tight joint to the perimeter and together with the bottom wall delimits a third cavity that is located under the bottom cavity. In operation, a medium other than the gas supplied by the ventilation system can flow through the third cavity, and said medium then exchanges heat with the gas flowing through the bottom cavity. This other medium may, for example, be groundwater, which can provide extra heat if the inner space is to be heated, and extra cooling if cooling of the inner space is required. Because a heat pump can extract more heat from the groundwater, the circulation can be increased and the conduction heat loss through the flow-through insulation assembly falls almost to zero, whereas the heat pump can then provide the heating and cooling of the whole building including the inner space above the crawl space.

Within, in front of, or behind the top opening and/or the bottom opening, equipment may be placed, with which the through-flowing gas is subjected to a pre-treatment or a post-treatment, for example, selected from the list of one or more filters, one or more gas absorbers, one or more humidifiers, one or more dehumidifiers, etc. This makes it possible, for example, for the through-flowing gas to be utilized, preventing contamination or obstruction of the flow-through space and the cavities.

In a possible embodiment of the method, the top cavity is warmer than the bottom cavity, so that thermal stratification occurs, in particular in the space through which the gas flows between the perforated top film and perforated bottom film. This is favourable because this stratification counteracts the development of undesirable turbulence, which may have an adverse influence on the blocking effect.

The invention further relates to a climate control system according to claim 13 for controlling an indoor climate of an inner space, for example, according to the method as described herein, said inner space being partly delimited by a floor, wherein an underfloor space, for example a crawl space, is present under the floor.

In a possible embodiment, for example in the situation in which the top cavity is warmer than the bottom cavity, but optionally also in other situations, the space between the perforated top film and perforated bottom film is empty. There may optionally be wires or the like in this space, which define a maximum distance between the perforated films. These wires or the like may also be provided in one or both cavities of the ventilation assembly.

Owing to the presence of thermal stratification in the space through which the gas flows between the perforated top film and perforated bottom film, it may be possible to dispense with the presence of a porous insulating material as is described in WO2019017784 and as is provided there in order to prevent thermal turbulence and flow turbulence. Therefore, in the context of the present invention, this space may be empty, which is preferred.

In a possible embodiment, the insulation assembly is configured as a film packet that can be rolled up and/or folded up, with a packet of films stacked on one another. In one embodiment, the film packet may be unrolled under the floor and be inflated by the ventilation system, for example wherein the insulation assembly then unfolds like an air mattress. Optionally, the film packet has tubular spaces that are inflatable in order to serve as stiffening ribs, such as is known for inflatable tents.

A configuration of a film packet that can be rolled up and/or folded up makes it possible, for example, after expansion of the ventilation system, to allow the film packet to fold up again, for example, under the effect of gravity. The folded insulation assembly may then optionally be rolled up and/or folded up again, and be installed again later.

For example, it is envisaged that the insulation assembly is configured as a film packet, wherein, for carrying out activities under the floor, the ventilation system is stopped so that the film packet collapses and access is provided under the floor for carrying out said activities. Preferably, it is possible to walk on the insulation assembly in said folded state. Optionally, the folded packet is rolled up and/or folded up.

The invention also relates to a building provided with an inner space that is partly delimited by a floor, wherein an underfloor space, for example a crawl space, is present under the floor, said building being provided with a climate control system according to the invention.

The invention also relates to a method according to claim 20 for installing a climate control system, wherein the insulation assembly in the folded state, optionally rolled up and/or folded up, is brought into the space under the floor, for example into the crawl space, wherein the insulation assembly is inflated in said space by means of a fan, optionally is unrolled or unfolded first, and optionally is laid on the floor of the space.

The invention will be explained hereunder on the basis of the figures. These show:

Fig. 1 shows a schematic cross-section of a flow-through insulation assembly according to the present invention;
Fig. 2 shows a schematic cross-section of a second application of a flow-through insulation assembly according to the present invention;
Fig. 3 shows a schematic cross-section of a third application of a flow-through insulation assembly according to the present invention;
Fig. 4 shows a schematic cross-section of a detail of an embodiment of a flow-through insulation assembly according to the present invention.

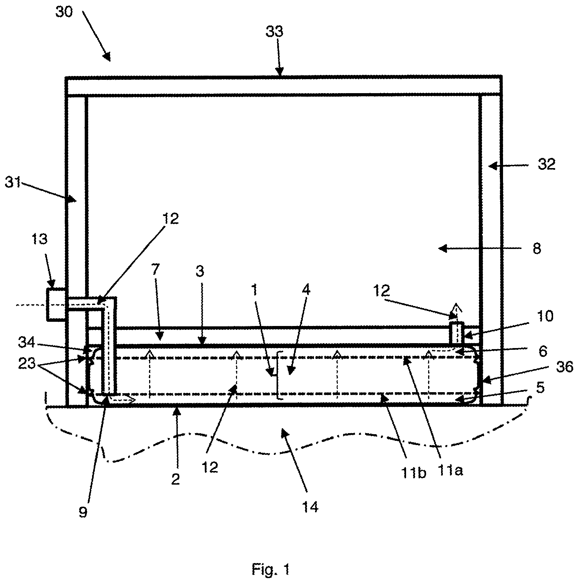

Fig. 1 shows schematically a building 30 with side walls 31, 32, and roof 33, and an inner space 8 in the building 30. The inner space 8 is partly delimited by a floor 7.

Under the floor 7 there is an underfloor space 34, here a crawl space with a bottom, and under this the ground 14.

In the space 34 there is an embodiment of a flow-through insulation assembly 1 according to the invention. The insulation assembly 1 has a gas-tight chamber with a top wall 3, a bottom wall 2, and a perimeter 23, here with a peripheral wall 36. The top wall 3, the bottom wall 2, and the peripheral wall 36 are each essentially formed by a gas-tight film. Furthermore, a perforated top film 11a and a perforated bottom film 11b are arranged in the gas-tight chamber.

The top wall 3, the bottom wall 2, the top film 11a, and the bottom film 11b have an air-tight joint to the perimeter, here with peripheral wall 36, of the gas-tight chamber, so that a top cavity 6 of the insulation assembly is delimited between the perforated top film 11a and the top wall 3, a bottom cavity 5 of the insulation assembly is delimited between the perforated bottom film 11b and the bottom wall 2, and a flow-through space for gas 4 is delimited between the perforated top film 11a and the perforated bottom film 11b, and is surrounded by the peripheral wall 36.

It is preferred that the space 4 is empty, and thus free from a filling with porous material. The same applies to the cavities 5, 6.

The insulation assembly 1 has a top opening 10, which is connected to the top cavity 6, and a bottom opening 9, which is connected to the bottom cavity 5.

In this example, the bottom opening 9 communicates with the outside air, for example via a pipe and/or hose. Here, the top opening 10 communicates with the inner space, optionally with a ventilation system for the inner space 8.

To create a flow of gas, here air, through the insulation assembly, a fan 13 is provided. In this example the fan 13 is connected to the bottom opening 9.

Here, the insulation assembly 1 is configured as a film packet that can be rolled up and/or folded up with a packet of films stacked on one another, here the top wall 3, the bottom wall 2, the perforated top film 11a and the perforated bottom film 11b, wherein, preferably, the flow-through space between the perforated films 11a, b and surrounded by the peripheral wall 36, is empty.

The insulation assembly 1 is, for example, brought in the folded state, optionally rolled up and/or folded up, into the space under the floor, for example into the crawl space.

Once in said space, the insulation assembly 1 is inflated by means of a fan, optionally after first being unrolled or unfolded. Here, the insulation assembly is placed on the bottom of the space. The fan 13 may optionally already be used during installation of the assembly.

After inflation, the top wall 3 is now under or against the floor 7 of the inner space 8, and the bottom wall 2 lies on the bottom of the space 34 and thus on the ground 14. The crawl space is thus filled completely or partially.

The flow of the through-flowing gas is indicated here with a streamline 12 as a dotted line, which is indicated here in the heating state of the climate control, and which is the other way round in the cooling state. The gas flow may be either upwards or downwards, depending on the desired climate in the inner space 8.

In this example outside air is drawn in with the fan 13 and is pumped into the bottom cavity 5 via said opening 9. The air then passes through the perforated bottom film 11b belonging to said cavity 5. The gas then comes into the space for gas flow-through 4 between the bottom film 11b and the top film 11a, and flows upwards through said space 4, and then leaves said space 4 through the perforated top film 11a. The gas then flows into the top cavity 6 and leaves said top cavity and the gas-tight chamber via the top opening 10 and in this case comes into the inner space 8. In a possible embodiment the ventilation system is only able to create this flow from bottom to top. As mentioned, the ventilation system may also be arranged so that the flow through the insulation assembly is from bottom to top, or from top to bottom, as selected, depending on the intended climate control. In all cases the gas flows in the flow-through space 4 almost parallel to the heat flow, which can ensure blocking of the heat or cold.

As has been described, as the Pe number of the through-flowing gas increases, the flow of conduction heat is blocked more, the effective conductivity is lower and the insulation of the flow-through insulation assembly 1 is better.

Within, in front of or behind the openings 9 and 10, equipment may be placed for pre-treatment or post-treatment of the through-flowing gas, such as pumps, fans, filters, gas absorbers, humidifiers, dehumidifiers, etc., so that the through-flowing gas may be utilized and there is no contamination or obstruction of the flow-through insulation packet 1 and the cavities 5 and 6.

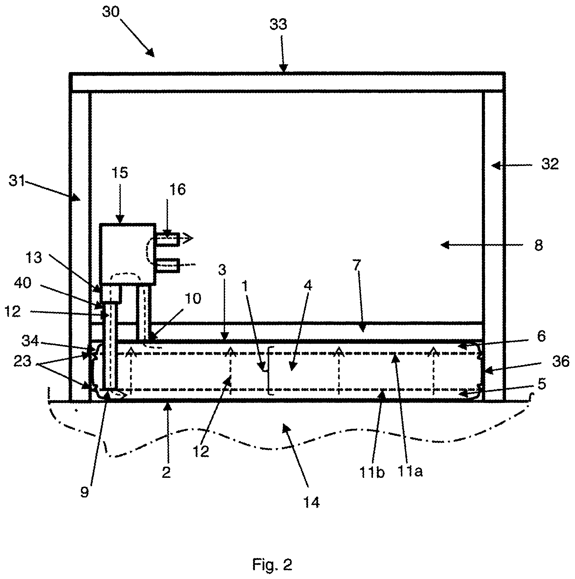

In Fig. 2, components that are the same as in Fig. 1 are given the same reference numbers. Fig. 2 again shows the building 30 with the insulation assembly 1 in the crawl space 34 under the floor 7.

In contrast to the "open circulation" in Fig. 1, here it is an embodiment with a closed gas circuit.

In this embodiment, a circulation passage 40 is present, which is connected to the bottom opening 9 and to the top opening 10. Said passage 40 forms, with the bottom cavity 5, the space for gas flow-through 4, and with the top cavity 6, a closed gas circuit. In general terms, the ventilation system has a fan 13 for the circulation passage 40, which circulates gas present in the closed gas circuit, and thus into and out of the assembly 1, and creates movement of the gas through the space for gas flow-through 4, from bottom to top or from top to bottom.

A heat pump 15 with an evaporator part and a condenser part may also be seen in this example. This shows schematically that the gas circulating in the closed gas circuit flows through an evaporator part of the heat pump 15 and exchanges heat with it.

It is shown here that the heat pump 15 has a fan 13, which causes the gas to flow through the evaporator part, and which forms part of the fan assembly.

The flow of the through-flowing gas is indicated with a streamline 12 as a dotted line, which is indicated here in the heating state, and which is the other way round in the cooling state. The flow through the assembly 1 may be directed either upwards or downwards, depending on the desired climate in the inner space 8.

The flow-through insulation assembly 1 is connected to the evaporator part of a heat pump 15 and exchanges heat with it. If the inner space 8 has to be heated, the fan 13 forces the cooled gas to flow from the evaporator to the bottom cavity 5, and it absorbs heat from the ground 14 under the crawl space 34. Then the gas goes through the flow-through insulation assembly 1 to the top cavity 6 and is warmed up further by recuperation of the conduction heat that will flow down through the assembly 1. Then the gas flows via the top cavity 6 back to the evaporator of the heat pump 15, where it is cooled further, so that it is colder than the temperature of the ground 14, and after which the closed cycle is repeated again. In the bottom cavity 5, it is thus colder than the ground 14, and heat can only flow from the ground 14 to the bottom cavity 5, and the flow of the conduction heat from the floor 7 to the ground 14 is blocked completely. Thus, the air circulation of the air heat pump 15 is utilized for considerable improvement of the insulation of the insulation packet 1 of the inner space 8. Moreover, the heat pump 15 does not in this case need an outside unit with filter and fan, and gets the extra heat from the ground 14.

The heat absorbed by the heat pump 15 is transferred by means of the condenser thereof according to the indicated streamlines 16 to a heating system that is not shown, for example such as floor heating, hot-air heating, or to a boiler or other heat storage.

If the inner space 8 has to be cooled, the fan 13 forces the cooled through-flowing gas from the evaporator part to the top cavity 6 and the gas absorbs heat from the floor 7, said floor 7 and thus also space 8 being cooled thereby. Then the gas goes through the flow-through insulation assembly 1 to the bottom cavity 6 and the gas is warmed up further by the conduction heat that will flow downwards through the assembly 1. Then it flows to the bottom cavity 5, where the gas gives up its heat to the ground 14, and the gas then flows to the evaporator of the heat pump 15, where it is cooled further, and after which the closed cycle is repeated again.

The heat absorbed by the heat pump 15 is transferred by means of the condenser thereof according to the indicated streamlines 16 to a system that is not shown, for example such as a boiler or other heat storage.

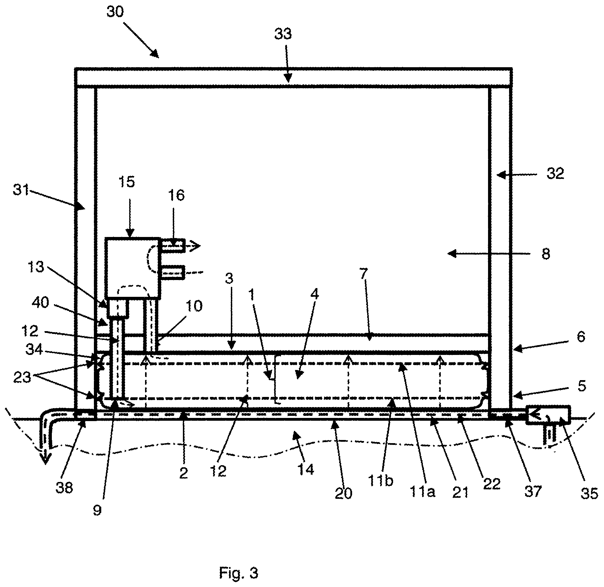

In Fig. 3, components that are the same as in Figs. 1 and/or 2 are given the same reference numbers. Fig. 3 again shows the building 30 with the insulation assembly 1 in the crawl space 34 under the floor 7.

In the embodiment in Fig. 3, there is an insulation assembly 1' that has, under the bottom wall 2 of the part further coinciding with insulation assembly 1, a further film 20, which together with the bottom wall 2 delimits a third cavity 21 that is located under the bottom cavity 5. A medium other than the gas displaced by the ventilation system is in this case passed through the third cavity 21, for example groundwater, said medium exchanging heat with the gas in the bottom cavity and with the ground 14.

For example, groundwater is pumped with a pump 35 via the opening 37 through the extra cavity 21 and led to the opening 38, where it is led away again. Other possibilities are for example warm, used ventilating air, bath or shower water, excess heat from solar water heaters, etc., wherein this heat, if it is not required, is also stored in the ground 14 to be utilized later by the heat pump 15.

The flow of the through-flowing gas is indicated here with a streamline 12 as a dotted line, which is indicated here in the heating state, and which is the other way round in the cooling state. The flow may be either upwards or downwards, depending on the desired climate in the inner space 8.

The flow-through insulation assembly 1 is connected to the evaporator of heat pump 15 and exchanges heat with it. If the inner space 8 has to be heated, the fan 13 forces the cooled through-flowing gas from the evaporator to the bottom cavity 5 and the gas exchanges heat with the extra medium in the cavity 21, for example such as groundwater indicated with the streamline 22 in the extra cavity 21 and optionally also with the ground 14 under the bottom of the crawl space under the floor 7 of the inner space 8. Then the gas goes through the flow-through insulation assembly 1 to the top cavity 6 and is warmed further by the conduction heat that will flow downwards through assembly 1. Then the gas flows via the top cavity 6 back to the evaporator part of the heat pump 15, where the gas is cooled further, so that it is colder than the temperature of the extra cavity 21, after which the closed cycle is repeated again. In the bottom cavity 5, it is thus colder than the extra cavity 21, and heat can only flow from the extra cavity 21 to bottom cavity 5 and the flow of the conduction heat from the floor 7 to the extra cavity 21 is blocked completely.

Thus, the air circulation of the air heat pump 15 is utilized for considerable improvement of the insulation of the insulation packet 1 of the inner space 8. Furthermore, the heat pump 15 does not need an outside unit with filter and fan, and obtains extra heat from the extra medium in the extra cavity 21 and optionally also from the ground 14.

The heat absorbed by the heat pump 15 is given up by means of the condenser according to the indicated streamlines 16 to a heating system that is not shown, for example such as floor heating, or to a boiler or other heat storage.

If the inner space 8 has to be cooled, the fan 13 forces the cooled gas to flow through from the evaporator part of the heat pump 15 to the top cavity 6 and it absorbs heat from the floor 7, which is cooled thereby. Then the gas goes through the flow-through insulation packet 1 to the bottom cavity 5 and the gas is warmed further by the conduction heat that will flow downwards through the assembly 1. Then the gas flows via the bottom cavity 5 where it gives up its heat to the extra cavity 21 and optionally the ground 14 and the gas flows to the evaporator of the heat pump 15, where it is cooled further, and after which the closed cycle is repeated again.

The heat absorbed by the heat pump 15 can then be given up by means of the condenser to a system, for example such as a boiler or other heat storage.

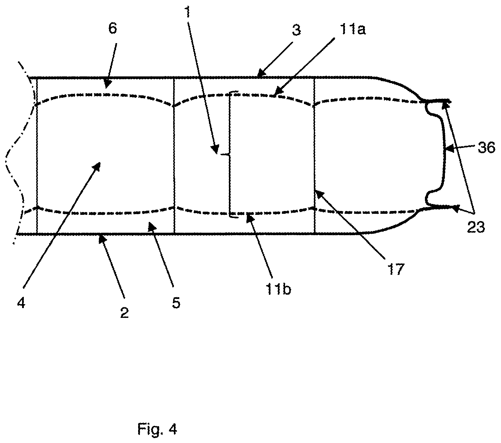

Fig. 4 shows a schematic cross-section of a detail of an embodiment of the flow-through insulation assembly according to the present invention. The bottom wall 2, the top wall 3, and the perforated films 11a,b of the insulation packet 1 are in this case held with wires 17 at a maximum distance relative to each other as the closed flow-through space 4 is unfolded by pumping up by the circulating fan.

At the perimeter 23 of the insulation assembly 1, the peripheral wall 36, the bottom wall 2, the top wall 3, and the perforated films 11a,b have air-tight joints to each other, for example with glued, welded or sewn joints.

If the insulation assembly 1 is only used for heating purposes, wherein the air flow is upwards, then in a suitable embodiment the perforated films 11a and 11b will float owing to the air resistance in the perforations, and wires 17 are not required.

**Claims**

1. Method for controlling an indoor climate of an inner space (8), said inner space (8) being partly delimited by a floor (7), wherein an underfloor space (34), for example a crawl space, is present under the floor (7),

   wherein use is made of a flow-through insulation assembly (1) that is arranged under the floor (7) of the inner space (8) and in the underfloor space (34),
   wherein the insulation assembly (1) has a gas-tight chamber with a top wall (3), a bottom wall (2), and a perimeter (23), wherein the top wall (3) is located under or against the floor (7) of the inner space (8),
   wherein the top wall (3) and the bottom wall (2) are each substantially formed by a gas-tight film material,
   wherein a perforated top film (11a) and a perforated bottom film (11b) are further arranged in the gas-tight chamber,
   wherein the top wall (3), the bottom wall (2), the top film (11a), and the bottom film (11b) have air-tight joints to the perimeter (23) of the gas-tight chamber, so that a top cavity (6) of the insulation assembly (1) is delimited between the perforated top film (11a) and the top wall (3), a bottom cavity (5) of the insulation assembly (1) is delimited between the perforated bottom film (11b) and the bottom wall (2), and a flow-through space (4) for gas is delimited between the perforated top film (11a) and the perforated bottom film (11b),
   wherein the insulation assembly (1) has a top opening (10) that is connected to the top cavity (6), and a bottom opening (9) that is connected to the bottom cavity (5),
   wherein use is further made of a ventilation system with at least one fan (13),
   wherein, for controlling the indoor climate of the inner space (8), the ventilation system is operated in order to supply a gas, for example air, to the gas-tight chamber of the insulation assembly (1) via either the bottom opening (9) or the top opening (10), said gas leaving the gas-tight chamber via the other one of the bottom opening (9) and the top opening (10), so that the gas either flows from bottom to top or from top to bottom through the insulation assembly (1), wherein the gas flows via the associated bottom cavity (5), or top cavity (6) respectively, through the bottom film (11b) or top film (11a) associated with said cavity into the space for gas flow-through between the bottom film (11b) and the top film (11a) and leaves said space through the other one of the bottom film (11b) and top film (11a) and then flows into the other one of the bottom cavity (5) and the top cavity (6), wherein the gas then leaves said cavity and the gas-tight chamber via the associated bottom connection, or top connection.

2. Method according to claim 1, wherein the ventilation system is configured so as to selectively supply gas to the bottom opening (9) or the top opening (10), and thereby create a flow of the gas through the insulation assembly (1) from bottom to top or from top to bottom, as selected.

3. Method according to claim 1 or 2, wherein additionally a circulation passage (40) is present that is connected to the bottom opening (9) and to the top opening (10) and that forms, together with the bottom cavity (5), the space for gas flow-through, and with the top cavity (6), a closed gas circuit, wherein the ventilation system comprises a fan (13) associated with the circulation passage (40), which fan (13) circulates gas present in the closed gas circuit and causes movement of the gas through the space for gas flow-through, from bottom to top or from top to bottom, wherein, preferably, the gas circulating in the closed gas circuit flows through an evaporator part of a heat pump (15) and exchanges heat with said evaporator part, wherein, preferably, the heat pump has a fan that causes the gas to flow through the evaporator part and forms part of the fan assembly.

4. Method according to claim 3, wherein - for heating the inner space (8) with the heat pump (15) - the cooled gas is conveyed from the evaporator part to the bottom cavity (5), wherein gas, possibly warmed through contact of the bottom cavity (5) with the ground (14), flows upwards through the flow-through space, in which the gas warms up by recuperation, and wherein the gas is conveyed from the top cavity (6) back to the evaporator part of the heat pump (15), where the absorbed heat is withdrawn and the absorbed heat is brought to a condenser part of the heat pump (15), where this heat, optionally at a higher temperature, is supplied to a heating system for the inner space (8).

5. Method according to one or more of claims 1 - 4, wherein the insulation assembly (1) is laid on the ground (14) in the crawl space (34), wherein the ventilation system is operated in order to withdraw heat from the ground (14) under the bottom or to supply heat to the ground (14) under the bottom, as selected, wherein, preferably, the insulation assembly (1) has, under the bottom wall (2), a further film (20) with an air-tight joint to the perimeter (23) and, with the bottom wall (2), delimits a third cavity (21) that is located under the bottom cavity (5), wherein a medium other than the gas propelled by the ventilation system is passed through the third cavity (21), for example groundwater, said medium exchanging heat with the gas in the bottom cavity (5).

6. Method according to one or more of claims 1 - 5, wherein the insulation assembly (1) and the ventilation system are arranged and are operated so that a gas flow is created thereby through the space between the perforated top film (11b) and the perforated bottom film (11a) with a Peclet number Pe greater than 0, preferably greater than 3, wherein the Pe number is determined from the velocity component v of the through-flowing gas, which is parallel to the heat flow, the thickness/height of the flow-through space between the perforated top film and bottom film, the specific heat Cp, the specific gravity $\rho_g$, the thermal conductivity $\lambda_g$ of the through-flowing gas:

$$Pe = v \, l \, Cp \, \rho_g / \lambda_g.$$

7. Method according to one or more of claims 1 - 6, wherein the insulation assembly (1) is arranged in a crawl space (34) under the floor (7) and the insulation assembly (1) fills up the crawl space (34) under the floor (7).

8. Method according to one or more of claims 1 - 7, wherein, for carrying out activities under the floor (7), the supply of gas by means of the ventilation system is stopped, and the insulation assembly (1) collapses.

9. Climate control system for controlling an indoor climate of an inner space (8), for example according to one or more of claims 1 - 8, said inner space partly being delimited by a floor (7), wherein an underfloor space (34), for example a crawl space, is present under the floor (7),

wherein a flow-through insulation assembly (1) is provided that is configured to be installed under the floor (7) of the inner space (8) and in the underfloor space (34),
wherein the insulation assembly (1) has a gas-tight chamber with a top wall (3), a bottom wall (2), and a perimeter (23), wherein the top wall (3) - during operation of the climate control system - is located under or against the floor (7) of the inner space (8),
wherein the top wall (3) and the bottom wall (2) are each substantially formed by a gas-tight film material,
wherein a perforated top film (11a) and a perforated bottom film (11b) are further arranged in the gas-tight chamber,
wherein the top wall (3), the bottom wall (2), the top film (11a), and the bottom film (11b) have air-tight joints to the perimeter (23) of the gas-tight chamber, so that a top cavity (6) of the insulation assembly (1) is delimited between the perforated top film (11a) and the top wall (3), a bottom cavity (5) of the insulation assembly (1) is delimited between the perforated bottom film (11b) and the bottom wall (2), and a flow-through space for gas is delimited between the perforated top film (11a) and the perforated bottom film (11b),
wherein the insulation assembly (1) has a top opening (10) that is connected to the top cavity (6), and a bottom opening (9) that is connected to the bottom cavity (5),
wherein further a ventilation system with at least one fan (13) is provided,
wherein, for controlling the indoor climate of the inner space (8), the ventilation system is configured for supplying a gas, for example air, to the gas-tight chamber of the insulation assembly (1) via either the bottom opening (9) or the top opening (10), said gas leaving the gas-tight chamber via the other one of the bottom opening (9) and the top opening (10), so that the gas either flows from bottom to top or from top to bottom through the insulation assembly (1), wherein the gas flows via the associated bottom cavity (5), or top cavity (6) respectively, through the bottom film (11b) or top film (11a) associated with said cavity into the space for gas flow-through between the bottom film (11b) and the top film (11a) and leaves said space through the other one of the bottom film (11b) and top film (11a) and then flows into the other one of the bottom cavity (5) and the top cavity (6), wherein the gas then leaves said cavity and the gas-tight chamber via the associated bottom connection, or top connection.

10. Climate control system according to claim 9, wherein the ventilation system is arranged to supply gas to the bottom opening (9) or the top opening (10) as selected, and thus create configured to selectively flow gas through the insulation assembly (1) from bottom to top or from top to bottom.

11. Climate control system according to claim 9 or 10, wherein additionally a circulation passage (40) is present that is connected to the bottom opening (9) and to the top opening (10) and that forms with the bottom cavity (5), the space for gas flow-through, and the top cavity (6) a closed gas circuit, wherein the ventilation system comprises a fan (13) associated with the circulation passage (40), which circulates gas present in the closed gas circuit and causes movement of the gas through the space for gas flow-through, from bottom to top or from top to bottom, preferably, wherein the climate control system further comprises a heat pump (15), wherein the gas circulating in the closed gas circuit can flow through an evaporator part of said heat pump (15) and exchange heat therewith.

12. Climate control system according to one or more of claims 9 - 11, wherein the insulation assembly (1) is configured as a film packet that can be rolled up and/or folded up with a packet of films stacked on one another, comprising the top wall (3), the bottom wall (2), the perforated top film (11a) and the perforated bottom film (11b), wherein, preferably, the flow-through space between the perforated films is empty.

13. Climate control system according to one or more of claims 9-12, wherein the perimeter (23) of the gas-tight chamber is formed by a peripheral wall (36), where the top wall (3), bottom wall (2) and the perforated films (11a, 11b) have air-tight joints at their perimeter (23), wherein said peripheral wall (36) is, preferably, foldable, so that the insulation assembly (1) is foldable together into a film packet and optionally can be rolled up and/or folded up.

14. Building (30) provided with an inner space (8) that is partly delimited by a floor (7), wherein an underfloor space (34), for example a crawl space, is present under the floor (7), wherein said building (30) is provided with a climate control system according to one or more of claims 9 - 13 for controlling an indoor climate of said inner space (8), wherein the flow-through insulation assembly (1) is arranged under the floor (7) of the inner space (8) and in the underfloor space (34), for example lies on the bottom of the crawl space.

15. Method for installing a climate control system according to claim 12 or 13, wherein the insulation assembly (1) is brought in the folded state, optionally rolled up and/or folded up, into the space (34) under the floor (7), for example into the crawl space, wherein the insulation assembly (1) is inflated in said space (34) by means of a fan (13), optionally is unrolled or unfolded first, and optionally is laid on the bottom of the space (34).

**Patentansprüche**

1. Verfahren zur Regelung des Innenraumklimas eines Innenraums (8), wobei der Innenraum (8) teilweise durch einen Boden (7) begrenzt ist, wobei unter dem Boden (7) ein Unterbodenraum (34), zum Beispiel ein Kriechraum, vorhanden ist,

wobei eine Durchfluss-Isolieranordnung (1) verwendet wird, die unter dem Boden (7) des Innenraums (8) und in dem Unterbodenraum (34) angeordnet ist,
wobei die Isolieranordnung (1) eine gasdichte Kammer mit einer oberen Wand (3), einer unteren Wand (2) und einer Umrandung (23) aufweist, wobei die obere Wand (3) unter oder an dem Boden (7) des Innenraums (8) angeordnet ist,
wobei die obere Wand (3) und die untere Wand (2) jeweils im Wesentlichen durch ein gasdichtes Folienmaterial gebildet sind,
wobei weiter eine perforierte obere Folie (11a) und eine perforierte untere Folie (11b) in der gasdichten Kammer angeordnet sind,
wobei die obere Wand (3), die untere Wand (2), die obere Folie (11a) und die untere Folie (11b) luftdichte Verbindungen mit der Umrandung (23) der gasdichten Kammer haben, so dass ein oberer Hohlraum (6) der Isolieranordnung (1) zwischen der perforierten oberen Folie (11a) und der oberen Wand (3) gebildet wird, ein unterer Hohlraum (5) der Isolieranordnung (1) zwischen der perforierten unteren Folie (11b) und der unteren Wand (2) gebildet wird, und ein Durchflussraum (4) für Gas zwischen der perforierten oberen Folie (11a) und der perforierten unteren Folie (11b) gebildet wird,

wobei die Isolieranordnung (1) eine obere Öffnung (10) aufweist, die mit dem oberen Hohlraum (6) verbunden ist, und eine untere Öffnung (9), die mit dem unteren Hohlraum (5) verbunden ist,

wobei weiter ein Belüftungssystem mit mindestens einem Ventilator (13) verwendet wird, wobei zur Regelung des Innenraumklimas des Innenraumes (8) das Belüftungssystem derart betrieben wird, dass der gasdichten Kammer der Isolieranordnung (1) entweder über die untere Öffnung (9) oder die obere Öffnung (10) ein Gas, beispielsweise Luft, zugeführt wird, welches die gasdichte Kammer über die jeweils andere der unteren (9) und oberen (10) Öffnung verlässt, so dass das Gas entweder von unten nach oben oder von oben nach unten durch die Isolieranordnung (1) fließt, wobei das Gas durch den assoziierten unteren Hohlraum (5) fließt, oder entsprechend durch den oberen Hohlraum (6), durch die mit dem Hohlraum assoziierte untere Folie (11b) oder obere Folie (11a) in den Raum für den Gasdurchfluss zwischen der unteren Folie (11b) und der oberen Folie (11a) fließt und den Raum durch die andere der unteren Folie (11b) und der oberen Folie (11a) verlässt und dann in den anderen des unteren Hohlraums (5) und des oberen Hohlraums (6) fließt, wobei das Gas dann den Hohlraum und die gasdichte Kammer über die assoziierte untere Verbindung oder die obere Verbindung verlässt.

2. Verfahren nach Anspruch 1, wobei das Belüftungssystem so konfiguriert ist, dass es wahlweise der unteren Öffnung (9) oder der oberen Öffnung (10) Gas zuführt und dadurch einen Gasfluss durch die Isolieranordnung (1) wahlweise von unten nach oben oder von oben nach unten erzeugt.

3. Verfahren nach Anspruch 1 oder 2, wobei zusätzlich ein Zirkulationskanal (40) vorhanden ist, der mit der unteren Öffnung (9) und der oberen Öffnung (10) verbunden ist und der mit dem unteren Hohlraum (5), den Raum für die Gasdurchfluss und mit dem oberen Hohlraum (6) eine geschlossene Gasleitung bildet, wobei das Belüftungssystem einen mit dem Zirkulationskanal (40) assoziierten Ventilator (13) umfasst, wobei der Ventilator (13) das in der geschlossenen Leitung vorhandene Gas umwälzt und eine Bewegung des Gases durch den Raum für die Gasdurchfluss von unten nach oben oder von oben nach unten bewirkt, wobei vorzugsweise das in der geschlossenen Leitung zirkulierende Gas durch einen Verdampferteil einer Wärmepumpe (15) fließt und mit dem Verdampferteil Wärme austauscht, wobei vorzugsweise die Wärmepumpe einen Ventilator aufweist, der bewirkt, dass das Gas durch den Verdampferteil fließt und einen Teil der Ventilatoranordnung bildet.

4. Verfahren nach Anspruch 3, wobei - zum Erwärmen des Innenraums (8) mit der Wärmepumpe (15) - das gekühlte Gas vom Verdampferteil zum unteren Hohlraum (5) befördert wird, wobei das Gas, das möglicherweise durch Kontakt des unteren Hohlraums (5) mit dem Boden (14) erwärmt wird, durch den Durchflussraum nach oben fließt, in dem sich das Gas durch Rekuperation erwärmt, und wobei das Gas aus dem oberen Hohlraum (6) zurück zum Verdampferteil der Wärmepumpe (15) befördert wird, wo die absorbierte Wärme entzogen wird und die absorbierte Wärme zu einem Kondensatorteil der Wärmepumpe (15) gebracht wird, wo diese Wärme, optional mit einer höheren Temperatur, einem Heizsystem für den Innenraum (8) zugeführt wird.

5. Verfahren nach einem oder mehreren der Ansprüche 1 - 4, wobei die Isolieranordnung (1) im Kriechraum (34) auf dem Boden (14) verlegt wird, wobei das Belüftungssystem betrieben wird um wahlweise dem Boden (14) unter dem Boden Wärme zu entziehen oder dem Boden (14) unter dem Boden Wärme zuzuführen, wobei vorzugsweise die Isolieranordnung (1) unter der Bodenwand (2) eine weitere Folie (20) mit einer luftdichten Verbindung zum Umrandung (23) aufweist und mit der Bodenwand (2) einen dritten Hohlraum (21) bildet, der sich unter dem unteren Hohlraum (5) befindet, wobei durch den dritten Hohlraum (21) ein anderes Medium als das von dem Belüftungssystem getriebene Gas, z.B. Grundwasser, geleitet wird, das mit dem Gas im unteren Hohlraum (5) Wärme austauscht.

6. Verfahren nach einem oder mehreren der Ansprüche 1 - 5, wobei die Isolieranordnung (1) und das Belüftungssystem so angeordnet sind und betrieben werden, dass dadurch ein Gasfluss durch den Raum zwischen der perforierten oberen Folie (11b) und der perforierten unteren Folie (11a) mit einer Peclet-Zahl Pe größer als 0, vorzugsweise größer als 3, erzeugt wird, wobei die Pe-Zahl bestimmt wird aus der zum Wärmestrom parallelen Geschwindigkeitskomponente v des hindurchfließenden Gases, der Dicke/Höhe des durchströmten Raumes zwischen perforierter oberer Folie und unterer Folie, der spezifischen Wärme Cp, dem spezifischen Gewicht $\varrho_g$, der Wärmeleitfähigkeit $\lambda_g$ des durchfließenden Gases:

$$Pe = v \, I \, Cp \, \varrho_g / \lambda_g.$$

7. Verfahren nach einem oder mehreren der Ansprüche 1 bis 6, wobei die Isolieranordnung (1) in einem Kriechraum (34) unter dem Boden (7) angeordnet ist und die Isolieranordnung (1) den Kriechraum (34) unter dem Boden (7) ausfüllt.

8. Verfahren nach einem oder mehreren der Ansprüche 1 bis 7, wobei zur Durchführung von Arbeiten unter dem Boden (7) die Gaszufuhr durch das Lüftungssystem unterbrochen wird und die Isolieranordnung (1) zusammenfällt.

9. Klimaregelungssystem zur Regelung des Innenraumklimas eines Innenraums (8), beispielsweise nach einem oder mehreren der Ansprüche 1 - 8, wobei der Innenraum teilweise durch einen Boden (7) begrenzt ist, wobei ein Unterbodenraum (34), beispielsweise ein Kriechraum, unter dem Boden (7) vorhanden ist,

    wobei eine durchströmbare Isolieranordnung (1) vorgesehen ist, die so konfiguriert ist, dass sie unter dem Boden (7) des Innenraums (8) und in dem Unterbodenraum (34) installiert werden kann,
    wobei die Isolieranordnung (1) eine gasdichte Kammer mit einer oberen Wand (3), einer unteren Wand (2) und einem Umrandung (23) aufweist, wobei die obere Wand (3) - während des Betriebs des Klimaregelungssystems - unter oder an dem Boden (7) des Innenraums (8) angeordnet ist,
    wobei die obere Wand (3) und die untere Wand (2) jeweils im wesentlichen aus einem gasdichten Folienmaterial gebildet sind, wobei weiter in dem gasdichten Raum eine perforierte obere Folie (11a) und eine perforierte untere Folie (11b) angeordnet sind,
    wobei die obere Wand (3), die untere Wand (2), die obere Folie (11a) und die untere Folie (11b) luftdichte Verbindungen mit dem Umrandung (23) der gasdichten Kammer aufweisen, so dass ein oberer Hohlraum (6) der Isolieranordnung (1) zwischen der perforierten oberen Folie (11a) und der oberen Wand (3) gebildet wird, ein unterer Hohlraum (5) der Isolieranordnung (1) zwischen der perforierten unteren Folie (11b) und der unteren Wand (2) gebildet wird, und ein Durchflussraum für Gas zwischen der perforierten oberen Folie (11a) und der perforierten unteren Folie (11b) gebildet wird,
    wobei die Isolieranordnung (1) eine obere Öffnung (10) aufweist, die mit dem oberen Hohlraum (6) verbunden ist, und eine untere Öffnung (9), die mit dem unteren Hohlraum (5) verbunden ist,
    wobei weiter ein Belüftungssystem mit mindestens einem Ventilator (13) vorgesehen ist,

    wobei zur Regelung des Innenraumklimas des Innenraums (8) das Belüftungssystem konfiguriert ist, um der gasdichten Kammer der Isolieranordnung (1) entweder über die untere Öffnung (9) oder die obere Öffnung (10) ein Gas, z.B. Luft, zuzuführen, das die gasdichte Kammer über die jeweils andere der unteren (9) und oberen (10) Öffnung verlässt, so dass das Gas entweder von unten nach oben oder von oben nach unten durch die Isolieranordnung (1) fließt, wobei das Gas durch den assoziierten unteren Hohlraum (5) fließt, oder entsprechend den oberen Hohlraum (6), durch die untere Folie (11b) oder die obere Folie (11a), die mit dem Hohlraum assoziiert sind, in den Raum für den Gasdurchfluss zwischen der unteren Folie (11b) und der oberen Folie (11a) fließt und den Raum durch die andere der unteren Folie (11b) und der oberen Folie (11a) verlässt und dann in den anderen des unteren Hohlraums (5) und des oberen Hohlraums (6) fließt, wobei das Gas dann den Hohlraum und die gasdichte Kammer über den assoziierten unteren Anschluss oder oberen Anschluss verlässt.

10. Klimaregelungssystem nach Anspruch 9, wobei das Belüftungssystem so angeordnet ist, dass es der unteren Öffnung (9) oder der oberen Öffnung (10) wahlweise Gas zuführt und somit so konfiguriert ist, dass Gas selektiv von unten nach oben oder von oben nach unten durch die Isolieranordnung (1) fließt.

11. Klimaregelungssystem nach Anspruch 9 oder 10, wobei zusätzlich ein Zirkulationsdurchgang (40) vorhanden ist, der mit der unteren Öffnung (9) und der oberen Öffnung (10) verbunden ist und der mit dem unteren Hohlraum (5), dem Raum für den Gasdurchfluss, und dem oberen Hohlraum (6) ein geschlossener Kreis bildet, wobei das Lüftungssystem einen dem Zirkulationsdurchgang (40) assoziierten Ventilator (13) umfasst, der in dem geschlossenen Gaskreislauf vorhandenes Gas umwälzt und eine Bewegung des Gases durch den Raum für den Gasdurchfluss von unten nach oben oder von oben nach unten bewirkt, wobei das Klimaregelungssystem weiter eine Wärmepumpe (15) umfasst, wobei das in dem geschlossenen Gaskreislauf zirkulierende Gas durch einen Verdampferteil der Wärmepumpe (15) fließen und mit diesem Wärme austauschen kann.

12. Klimaregelungssystem gemäß einem oder mehreren der Ansprüche 9 bis 11, wobei die Isolieranordnung (1) als ein Folienpaket konfiguriert ist, das aufgerollt und/oder zusammengefaltet werden kann wobei sich einen Paket von aufeinander gestapelter Folien bildet das die obere Wand (3), die untere Wand (2), die perforierte obere Folie (11a) und die perforierte untere Folie (11b) umfasst, wobei vorzugsweise der Durchflussraum zwischen den perforierten Folien leer ist.

13. Klimaregelungssystem nach einem oder mehreren der Ansprüche 9-12, wobei der Umrandung (23) der gasdichten Kammer durch eine Umfangswand (36) gebildet wird, wobei die obere Wand (3), die untere Wand (2) und die perforierten Folien (11a, 11b) an ihrem Umfang (23) luftdichte Verbindungen aufweisen, wobei die Umfangswand (36) vorzugsweise faltbar ist, so dass die Isolieranordnung (1) zu einem Folienpaket zusammenfaltbar ist und optional aufgerollt und/oder zusammengefaltet werden kann.

14. Gebäude (30) mit einem Innenraum (8), der teilweise durch einen Fußboden (7) begrenzt ist, wobei unter dem Fußboden (7) ein Unterbodenraum (34), beispielsweise ein Kriechraum, vorhanden ist, wobei das Gebäude (30) mit einem Klimaregelungssystem gemäß einem oder mehreren der Ansprüche 9 bis 13 zum Regeln eines Innenraumklimas des Innenraums (8) versehen ist, wobei die durchströmte Isolieranordnung (1) unter dem Boden (7) des Innenraums (8) und im Unterbodenraum (34) angeordnet ist, beispielsweise auf dem Boden des Kriechraums liegt.

15. Verfahren zur Installation eines Klimaregelungssystems nach Anspruch 12 oder 13, wobei die Isolieranordnung (1) in gefaltetem Zustand, optional aufgerollt und/oder zusammengefaltet, in den Raum (34) unter dem Boden (7), beispielsweise in den Kriechraum, eingebracht wird, wobei die Isolieranordnung (1) in diesem Raum (34) mittels einen Ventilator (13) aufgeblasen wird, optional zunächst ausgerollt oder entfaltet wird und optional auf den Boden des Raumes (34) gelegt wird.

## Revendications

1. Procédé de régulation d'un climat intérieur d'un espace interne (8), ledit espace interne (8) étant partiellement délimité par un sol (7), dans lequel un espace situé sous le sol (34), comme un vide sanitaire, est présent sous le sol (7),

   dans lequel est utilisé un ensemble d'isolation intermédiaire (1) qui est prévu sous le sol (7) de l'espace interne (8) et dans l'espace situé sous le sol (34),
   dans lequel l'ensemble d'isolation (1) possède une chambre étanche au gaz avec une paroi supérieure (3), une paroi inférieure (2) et un périmètre (23), dans lequel la paroi supérieure (3) se trouve sous ou contre le sol (7) de l'espace interne (8),
   dans lequel la paroi supérieure (3) et la paroi inférieure (2) sont chacune sensiblement formées d'un matériau de film étanche au gaz,
   dans lequel un film supérieur perforé (11a) et un film inférieur perforé (11b) sont en outre prévus dans la chambre étanche au gaz,
   dans lequel la paroi supérieure (3), la paroi inférieure (2), le film supérieur (11a) et le film inférieur (11b) possèdent des joints étanches à l'air par rapport au périmètre (23) de la chambre étanche au gaz, de sorte qu'une cavité supérieure (6) de l'ensemble d'isolation (1) soit délimitée entre le film supérieur perforé (11a) et la paroi supérieure (3), une cavité inférieure (5) de l'ensemble d'isolation (1) soit délimitée entre le film inférieur perforé (11b) et la paroi inférieure (2), et un espace intermédiaire (4) destiné au gaz soit délimité entre le film supérieur perforé (11a) et le film inférieur perforé (11b),
   dans lequel l'ensemble d'isolation (1) possède une ouverture supérieure (10) qui est reliée à la cavité supérieure (6), et une ouverture inférieure (9) qui est reliée à la cavité inférieure (5),
   dans lequel est utilisé un système de ventilation avec au moins un ventilateur (13), dans lequel, afin de réguler le climat intérieur de l'espace interne (8), le système de ventilation est déclenché afin de fournir un gaz, comme de l'air, à la chambre étanche au gaz de l'ensemble d'isolation (1) via l'ouverture inférieure (9) ou l'ouverture supérieure (10), ledit gaz quittant la chambre étanche au gaz via l'autre de l'ouverture inférieure (9) et de l'ouverture supérieure (10), de sorte que le gaz circule du bas vers le haut ou du haut vers le bas à travers l'ensemble d'isolation (1), dans lequel le gaz circule via la cavité inférieure associée (5), ou la cavité supérieure (6) respectivement, à travers le film inférieur (11b) ou le film supérieur (11a) associé à ladite cavité vers l'espace destiné à l'écoulement du gaz entre le film inférieur (11b) et le film supérieur (11a) et quitte ledit espace par l'autre du film inférieur (11b) et du film supérieur (11a) puis circule vers l'autre de la cavité inférieure (5) et de la cavité supérieure (6), dans lequel le gaz quitte ensuite ladite cavité et la chambre étanche au gaz via le raccord inférieur associé, ou le raccord supérieur.

2. Procédé selon la revendication 1, dans lequel le système de ventilation est configuré de façon à fournir sélectivement du gaz à l'ouverture inférieure (9) ou l'ouverture supérieure (10), et à créer ainsi un écoulement de gaz à travers l'ensemble d'isolation (1) de bas en haut ou de haut en bas, selon le choix.

3. Procédé selon la revendication 1 ou 2, dans lequel, en outre, un passage de circulation (40) est présent et est relié à l'ouverture inférieure (9) et à l'ouverture supérieure (10), et forme, avec la cavité inférieure (5), l'espace destiné à l'écoulement de gaz, et, avec la cavité supérieure (6), un circuit de gaz fermé, dans lequel le système de ventilation comprend un ventilateur (13) associé au passage de circulation (40), ledit ventilateur (13) faisant circuler le gaz présent dans le circuit de gaz fermé et provoquant le déplacement du gaz dans l'espace destiné à l'écoulement de gaz, de bas en haut ou de haut en bas, dans lequel, de préférence, le gaz qui circule dans le circuit de gaz fermé s'écoule à travers une partie d'évaporateur d'une pompe à chaleur (15) et échange de la chaleur avec ladite partie d'évaporateur, dans lequel, de préférence, la pompe à chaleur possède un ventilateur qui permet au gaz de s'écouler à travers la partie d'évaporateur et fait partie de l'ensemble de ventilateur.

4. Procédé selon la revendication 3, dans lequel, afin de chauffer l'espace interne (8) avec la pompe à chaleur (15), le gaz refroidi est acheminé de la partie d'évaporateur vers la cavité inférieure (5), dans lequel le gaz, possiblement réchauffé par contact de la cavité inférieure (5) avec le sol (14), s'écoule vers le haut à travers l'espace d'écoulement, dans lequel le gaz chauffe par récupération, et dans lequel le gaz est acheminé de la cavité supérieure (6) jusqu'à la partie d'évaporateur de la pompe à chaleur (15), dans laquelle la chaleur absorbée est éliminée et la chaleur absorbée est amenée jusqu'à une partie de condenseur de la pompe à chaleur (15), dans laquelle cette chaleur, éventuellement à une température plus élevée, est fournie à un système de chauffage destiné à l'espace interne (8).

5. Procédé selon une ou plusieurs des revendications 1 à 4, dans lequel l'ensemble d'isolation (1) repose sur le sol (14) dans le vide sanitaire (34), dans lequel le système de ventilation est déclenché afin d'éliminer la chaleur du sol (14) depuis le dessous ou de fournir de la chaleur au sol (14) par le dessous, selon le choix, dans lequel, de préférence, l'ensemble d'isolation (1) possède, sous la paroi inférieure (2), un autre film (20) avec un joint étanche à l'air par rapport au périmètre (23) et, avec la paroi inférieure (2), délimite une troisième cavité (21) qui se trouve sous la cavité inférieure (5), dans lequel un milieu autre que le gaz propulsé par le système de ventilation passe à travers la troisième cavité (21), comme de l'eau souterraine, ledit milieu échangeant de la chaleur avec le gaz dans la cavité inférieure (5).

6. Procédé selon une ou plusieurs des revendications 1 à 5, dans lequel l'ensemble d'isolation (1) et le système de ventilation sont prévus et déclenchés de sorte qu'un écoulement de gaz soit créé dans l'espace entre le film supérieur perforé (11b) et le film inférieur perforé (11a) avec un nombre de Péclet supérieur à 0, de préférence supérieur à 3, dans lequel le nombre Pe est déterminé à partir de la composante de vitesse v du gaz qui s'écoule, qui est parallèle au flux de chaleur, de l'épaisseur/la hauteur de l'espace d'écoulement entre le film supérieur perforé et le film inférieur, de la chaleur spécifique Cp, de la gravité spécifique $\rho_g$, et de la conductivité thermique $\lambda_g$ du gaz qui s'écoule :

$$Pe = v \cdot Cp \, \rho_g / \lambda_g.$$

7. Procédé selon une ou plusieurs des revendications 1 à 6, dans lequel l'ensemble d'isolation (1) est prévu dans un vide sanitaire (34) sous le sol (7) et l'ensemble d'isolation (1) remplit le vide sanitaire (34) sous le sol (7).

8. Procédé selon une ou plusieurs des revendications 1 à 7, dans lequel, afin de réaliser des activités sous le sol (7), l'alimentation en gaz à l'aide du système de ventilation est arrêtée, et l'ensemble d'isolation (1) s'affaisse.

9. Système de régulation de climat destiné à réguler un climat intérieur d'un espace interne (8), selon une ou plusieurs des revendications 1 à 8 par exemple, ledit espace interne étant partiellement délimité par un sol (7), dans lequel un espace situé sous le sol (34), comme un vide sanitaire, est présent sous le sol (7),

dans lequel un ensemble d'isolation intermédiaire (1) est prévu et est configuré pour être installé sous le sol (7) de l'espace interne (8) et dans l'espace situé sous le sol (34),
dans lequel l'ensemble d'isolation (1) possède une chambre étanche au gaz avec une paroi supérieure (3), une paroi inférieure (2) et un périmètre (23), dans lequel la paroi supérieure (3), pendant le fonctionnement du système de régulation de climat, se trouve sous ou contre le sol (7) de l'espace interne (8),
dans lequel la paroi supérieure (3) et la paroi inférieure (2) sont chacune sensiblement formées d'un matériau de film étanche au gaz,
dans lequel un film supérieur perforé (11a) et un film inférieur perforé (11b) sont en outre prévus dans la chambre étanche au gaz,
dans lequel la paroi supérieure (3), la paroi inférieure (2), le film supérieur (11a) et le film inférieur (11b) possèdent des joints étanches à l'air par rapport au périmètre (23) de la chambre étanche au gaz, de sorte qu'une cavité supérieure (6) de l'ensemble d'isolation (1) soit délimitée entre le film supérieur perforé (11a) et la paroi supérieure (3), une cavité inférieure (5) de l'ensemble d'isolation (1) soit délimitée entre le film inférieur perforé (11b) et la paroi inférieure (2), et un espace intermédiaire (4) destiné au gaz soit délimité entre le film supérieur perforé (11a) et le film inférieur perforé (11b),
dans lequel l'ensemble d'isolation (1) possède une ouverture supérieure (10) qui est reliée à la cavité supérieure (6), et une ouverture inférieure (9) qui est reliée à la cavité inférieure (5),
dans lequel, en outre, un système de ventilation avec au moins un ventilateur (13) est prévu,
dans lequel, afin de réguler le climat intérieur de l'espace interne (8), le système de ventilation est configuré afin de fournir un gaz, comme de l'air, à la chambre étanche au gaz de l'ensemble d'isolation (1) via l'ouverture inférieure (9) ou l'ouverture supérieure (10), ledit gaz quittant la chambre étanche au gaz via l'autre de l'ouverture inférieure (9) et de l'ouverture supérieure (10), de sorte que le gaz circule du bas vers le haut ou du haut vers le bas à travers l'ensemble d'isolation (1), dans lequel le gaz circule via la cavité inférieure associée (5), ou la cavité supérieure (6) respectivement, à travers le film inférieur (11b) ou le film supérieur (11a) associé à ladite cavité vers l'espace destiné à l'écoulement du gaz entre le film inférieur (11b) et le film supérieur (11a) et quitte ledit espace par l'autre du film inférieur (11b) et du film supérieur (11a) puis circule vers l'autre de la cavité inférieure (5) et de la cavité supérieure (6), dans lequel le gaz quitte ensuite ladite cavité et la chambre étanche au gaz via le raccord inférieur associé, ou le raccord supérieur.

10. Système de régulation de climat selon la revendication 9, dans lequel le système de ventilation est prévu pour fournir du gaz à l'ouverture inférieure (9) ou l'ouverture supérieure (10) selon le choix, et est ainsi configuré pour faire circuler sélectivement du gaz à travers l'ensemble d'isolation (1) de bas en haut ou de haut en bas.

11. Système de régulation de climat selon la revendication 9 ou 10, dans lequel, en outre, un passage de circulation (40) est présent et est relié à l'ouverture inférieure (9) et à l'ouverture supérieure (10), et forme, avec la cavité inférieure (5), l'espace destiné à l'écoulement de gaz, et, avec la cavité supérieure (6), un circuit de gaz fermé, dans lequel le système de ventilation comprend un ventilateur (13) associé au passage de circulation (40), qui fait circuler le gaz présent dans le circuit de gaz fermé et provoque le déplacement du gaz dans l'espace destiné à l'écoulement de gaz, de bas en haut ou de haut en bas, dans lequel, de préférence, le système de régulation de climat comprend en outre une pompe à chaleur (15), dans lequel le gaz qui circule dans le circuit de gaz fermé peut s'écouler à travers une partie d'évaporateur de ladite pompe à chaleur (15) et échanger de la chaleur avec celle-ci.

12. Système de régulation de climat selon une ou plusieurs des revendications 9 à 11, dans lequel l'ensemble d'isolation (1) est configuré comme un paquet de film qui peut être enroulé et/ou replié comme un paquet de films empilés les uns sur les autres, comprenant la paroi supérieure (3), la paroi inférieure (2), le film supérieur perforé (11a) et le film inférieur perforé (11b),dans lequel, de préférence, l'espace d'écoulement entre les films perforés est vide.

13. Système de régulation de climat selon une ou plusieurs des revendications 9 à 12, dans lequel le périmètre (23) de la chambre étanche au gaz est formé par une paroi périphérique (36), dans lequel la paroi supérieure (3), la paroi inférieure (2) et les films perforés (11a, 11b) possèdent des joints étanches à l'air au niveau de leur périmètre (23), dans lequel ladite paroi périphérique (36) est, de préférence, repliable, de sorte que l'ensemble d'isolation (1) soit repliable en un paquet de film et puisse être enroulé et/ou replié.

14. Bâtiment (30) équipé d'un espace interne (8) qui est partiellement délimité par un sol (7), dans lequel un espace situé sous le sol (34), comme un vide sanitaire, est présent sous le sol (7), dans lequel ledit bâtiment (30) est équipé d'un système de régulation de climat selon une ou plusieurs des revendications 9 à 13 afin de réguler un climat intérieur dudit espace interne (8), dans lequel l'ensemble d'isolation intermédiaire (1) est prévu sous le sol (7) de l'espace interne (8) et, dans l'espace situé sous le sol (34), se trouve par exemple au fond du vide sanitaire.

15. Procédé d'installation d'un système de régulation de climat selon la revendication 12 ou 13, dans lequel l'ensemble d'isolation (1) est amené dans l'état plié, éventuellement enroulé et/ou replié, dans l'espace (34) situé sous le sol (7), comme dans le vide sanitaire, dans lequel l'ensemble d'isolation (1) est gonflé dans ledit espace (34) à l'aide d'un ventilateur (13), est éventuellement déroulé ou déplié en premier, et est éventuellement posé au fond de l'espace (34).

Fig. 1

Fig. 2

Fig. 3

Fig. 4

**EP 3 781 877 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19727788 A1
- WO 2019017784 A